# EUROPÄISCHE PATENTANMELDUNG

(11) **EP 4 011 609 A1**
(43) Veröffentlichungstag der Anmeldung: **15.06.2022**
(21) Anmeldenummer: 21211130.6
(22) Anmeldetag: 29.11.2021
(51) Int. Cl.: B32B 15/08, B64D 11/06

(54) **VERFAHREN ZUM ANBRINGEN EINER KORROSIONSSCHUTZLAGE AN EINER ZU SCHÜTZENDEN OBERFLÄCHE EINES BAUTEILS**

(30) Priorität: 01.12.2020 DE 102020131895
(71) Anmelder: Airbus Operations GmbH, 21129 Hamburg (DE)
(72) Erfinder: Burka, Patryk, 21129 Hamburg (DE); Gorr, Eugen, 21129 Hamburg (DE)
(74) Vertreter: KASTEL Patentanwälte PartG mbB

(57) **Zusammenfassung**

Es wird ein Verfahren zum Anbringen einer Korrosionsschutzlage auf einer zu schützenden Oberfläche eines Bauteils vorgeschlagen, aufweisend die Schritte des Bereitstellens der Korrosionsschutzlage mit einer ersten Oberfläche und einer entgegengesetzt angeordneten zweiten Oberfläche, des Auflegens der ersten Oberfläche der Korrosionsschutzlage auf einer Bodenfläche einer Form, des Auflegens der zu schützenden Oberfläche des Bauteils auf der zweiten Oberfläche der Korrosionsschutzlage unter Einschluss einer Schicht einer aushärtbaren Dichtmasse, des Verschließens der Form durch Auflegen einer biegeweichen Abdeckung unter Einschluss der Korrosionsschutzlage und des Bauteils, des Evakuierens der Form, sodass die Abdeckung das Bauteil in Richtung der Korrosionsschutzlage drückt, und des Entfernens des Vakuums und der Abdeckung nach Aushärtung der Dichtmasse.

## Beschreibung

### TECHNISCHES GEBIET

Die Erfindung betrifft ein Verfahren zum Anbringen einer Korrosionsschutzlage an einer zu schützenden Oberfläche eines Bauteils.

Die Erfindung betrifft ferner ein System zum Anbringen einer Korrosionsschutzlage an einer zu schützenden Oberfläche eines Bauteils.

### HINTERGRUND DER ERFINDUNG

Im Stand der Technik existieren viele verschiedene Verfahren und Prozesse zum Erreichen eines Korrosionsschutzes korrosionsgefährdeter Bauteile. Solche Bauteile weisen üblicherweise Einbausituationen auf, die einen frequentierten Kontakt mit einer korrosionsfördernden Umgebung bedingen. Neben Kraftfahrzeugen, Schiffen, allgemeinen metallischen Konstruktionen im Freien oder feuchten Umgebungen sind auch Komponenten an und in Luftfahrzeugen korrosionsanfällig. Neben vielen anderen Beispielen sind etwa Fußbodenträger unter oder Fußbodenschienen in Kabinenböden von Flugzeugkabinen korrosionsanfällig. Dort kann neben der Kondensation aufgrund variierender Temperaturen und Druckverhältnisse auch mit frequentierten Verschmutzungen, beispielsweise durch auslaufende oder tropfende Flüssigkeiten aus der Kabine, gerechnet werden. Es ist bekannt, derartige Bauteile mit einer Korrosionsschutzlage auszustatten, was etwa das Anbringen eines dünnen Titanblechs oder einer Titanbeschichtung umfasst. Das Anbringen einer solchen Korrosionsschutzlage kann aufwändig sein, da ein aufwändiges Ausrichten, temporäres Fixieren und Verkleben notwendig ist. Gerade bei der Ausstattung längerer, schienenartiger Bauteile mit einer schmalen, zu schützenden Oberfläche kann dies sehr schwierig sein.

### ZUSAMMENFASSUNG DER ERFINDUNG

Es ist die Aufgabe der Erfindung, ein Verfahren zum Anbringen einer Korrosionsschutzlage auf ein korrosionsanfälliges Bauteil vorzuschlagen, welches besonders einfach und dennoch insbesondere bei schienenartigen Bauteilen zu einer präzisen und haltbaren Verbindung führt.

Die Aufgabe wird gelöst durch ein Verfahren mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Verfahren zum Anbringen einer Korrosionsschutzlage auf einer zu schützenden Oberfläche eines Bauteils vorgeschlagen, aufweisend die Schritte des Bereitstellens der Korrosionsschutzlage mit einer ersten Oberfläche und einer entgegengesetzt angeordneten zweiten Oberfläche, des Auflegens der ersten Oberfläche der Korrosionsschutzlage auf einer Bodenfläche einer Form, des Auflegens der zu schützenden Oberfläche des Bauteils auf der zweiten Oberfläche der Korrosionsschutzlage unter Einschluss einer Schicht einer aushärtbaren Dichtmasse, des Verschließens der Form durch Auflegen einer biegeweichen Abdeckung unter Einschluss der Korrosionsschutzlage und des Bauteils, des Evakuierens der Form, sodass die Abdeckung das Bauteil in Richtung der Korrosionsschutzlage drückt, und des Entfernens des Vakuums und der Abdeckung nach Aushärtung der Dichtmasse.

Zunächst wird die Korrosionsschutzlage bereitgestellt. Diese ist ein von dem Bauteil getrenntes Element und bevorzugt flächig ausgeführt. Dies bedeutet, dass die Korrosionsschutzlage ein Bauteil mit zwei in Dickenrichtung voneinander beabstandeten und bevorzugt zueinander parallelen Oberflächen aufweist. Hierbei ist beispielhaft die erste Oberfläche als eine

äußere Oberfläche gewählt, die zweite Oberfläche als eine zu dem Bauteil gewandte und mit dem Bauteil zu verbindende Oberfläche. Da die Korrosionsschutzlage lediglich dem Schutz vor äußeren Einflüssen dient, kann es sinnvoll sein, diese mit einer geringen Materialstärke zu gestalten. Je nach verwendetem Material könnte die Stärke der Korrosionsschutzlage deutlich unterhalb eines Millimeters liegen, beispielsweise bei 0,5 mm, 0,4 mm oder weniger. Dies ist selbstverständlich abhängig von dem Einsatzzweck des zu schützenden Bauteils, dessen Einbausituation und etwaiger Forderungen nach einem möglichst geringen Gewicht.

Das Bereitstellen der Korrosionsschutzlage könnte insbesondere das passgenaue Zuschneiden oder Fertigen der Korrosionsschutzlage umfassen, sodass seine Umfangskontur einer vorgegebenen Kontur entspricht, welche insbesondere der Kontur der zu schützenden Oberfläche des betreffenden Bauteils entspricht.

Die erste Oberfläche wird auf eine Bodenfläche einer Form gelegt. Die Form dient der Aufnahme sowohl der Korrosionsschutzlage als auch des betreffenden Bauteils, das mit der Korrosionsschutzlage verbunden wird. Hierfür weist die Form einen Hohlraum auf. Der Hohlraum wird auf einer Seite durch die Bodenfläche begrenzt. Seitlich an der Bodenfläche könnten sich Mantelflächen anschließen, die die Bodenfläche vollständig umlaufen und sich in Höhenrichtung über das Bauteil erstrecken. Die Form ist so ausgebildet, dass die Abdeckung auf einem von der Bodenfläche abgewandten Rand aufliegt, sodass die Korrosionsschutzlage und das betreffende Bauteil vollständig in der Form eingeschlossen werden können.

Die Bodenfläche und/oder der Hohlraum der Form könnte so ausgestaltet sein, dass die Korrosionsschutzlage eine genau vordefinierte Position einnimmt, wenn sie separat eingelegt wird. Hierzu könnte beispielsweise die Bodenfläche eine Vertiefung aufweisen, die mit der Kontur der Korrosionsschutzlage in Kontakt gerät. Dies ist allerdings lediglich ein

optionales Merkmal. Je nach verwendeter Dichtmasse könnten die Korrosionsschutzlage und das betreffende Bauteil mit einer ausreichenden Kohäsion bereits vor Einlegen in die Form zueinander fixiert sein und müssen in der Form nicht mehr zueinander fixiert werden. Dies bedeutet weiterhin, dass beide Komponenten bereits vor dem Einlegen in die Form durch die Wirkung der Dichtmasse aneinandergeheftet werden.

Der besondere Vorteil des erfindungsgemäßen Verfahrens liegt darin, dass die Korrosionsschutzlage und die zu schützende Oberfläche kontinuierlich mit einer Presskraft beaufschlagt werden können, um ein Aushärten der Dichtmasse bei vorgegebener Positionierung zu erreichen. Durch Anwenden der Presskraft an einer von der Korrosionsschutzlage abgewandten Seite kann ein kraftbedingtes Verrutschen der Korrosionsschutzlage bei Einwirkung der Presskraft verhindert werden. Weiterhin kann der Kontakt der Abdeckung mit tendenziell scharfen Kanten der Korrosionsschutzlage vermieden werden. Die Bodenfläche als untere Begrenzung der Form kann ausreichend fest und formstabil ausgestaltet sein, sodass eine sehr gleichmäßige und hohe Krafteinwirkung realisierbar ist, um lokale Einschlüsse von Luft zwischen der Korrosionsschutzlage und dem Bauteil praktisch auszuschließen. Auch für längere, bzw. längliche oder schienenartige Bauteile ist dieses Verfahren geeignet, da dort lediglich die Länge der Form für die Aufnahme des Bauteils maßgeblich ist und die lokale Kraftwirkung lediglich von dem Unterdruck in der Form abhängt. Mehrere Formen könnten miteinander verbindbar sein, um größere Längen von Bauteilen zu realisieren. Durch die Verwendung der biegeweichen Abdeckung können praktisch beliebige Bauteile durch das erfindungsgemäße Verfahren mit der Korrosionsschutzlage versehen werden. Es ist lediglich eine einzige Form notwendig, um eine Vielzahl von unterschiedlichen Bauteilen darin mit der Korrosionsschutzlage auszustatten. Zudem sind völlig unterschiedliche Formen der Korrosionsschutzlage möglich.

In einer bevorzugten Ausführungsform ist die Korrosionsschutzlage ein Titanblech. Das Titanblech ist besonders unempfindlich gegenüber äußeren, korrosiven und mechanischen Einflüssen und kann dennoch zur Realisierung der an es gestellten Aufgabe eine sehr geringe Materialstärke aufweisen. Das Blech zeichnet sich durch eine hohe Festigkeit aus und ist dadurch besonders für die Verwendung an Fußbodenträgern oder Fußbodenschienen geeignet.

Weiterhin könnte die Abdeckung eine Folie, eine folienartige Struktur und/oder eine Bahn aus einem Silikon und einen druckdichten Deckel aufweisen. Die Abdeckung kann durch einen umlaufenden Deckel eine dichtende Verbindung zu dem Rand der Form eingehen. Der Deckel kann sich hierzu streifenartig entlang des Randes erstrecken und die Folie, folienartige Struktur bzw. die Silikonbahn auf den Rand pressen, beispielsweise durch eine Reihe von Verschlüssen, die mit der Form verspannt werden. Der Deckel kann folglich einen mittigen Ausschnitt aufweisen. Die zwischen dem umlaufenden Rand und dem Deckel liegende Folie, folienartige Struktur oder Silikonbahn kann sich durch Evakuieren in die Form hinein bewegen und dort praktisch auf beliebig geformten Bauteilen aufliegen, sodass eine Druckkraft in Richtung der Bodenfläche auf das darin befindliche Bauteil ausgeübt werden kann. Die Folie, folienartige Struktur oder die Silikonbahn sind dabei derart zu dimensionieren, dass bei dem zu erwartenden Unterdruck eine ausreichende Stabilität gewährleistet und eine mehrfache Verwendung möglich ist.

Das Bauteil könnte ein Profilbauteil mit einer Oberseite und einer Unterseite aufweisen, wobei die Oberseite auf die zweite Oberfläche der Korrosionsschutzlage aufgelegt wird. Das Profilbauteil könnte etwa ein stranggepresstes Profilbauteil mit einem konstanten Querschnitt sein, beispielsweise ein Doppel-T-Träger. Das Bauteil könnte aus einer Aluminiumlegierung oder einer Stahllegierung bestehen. Die Unterseite des

Bauteils könnte wie die Oberseite geformt sein oder sich davon unterscheiden.

In einer vorteilhaften Ausführungsform kann die Form wannenförmig ausgebildet sein und eine obere Öffnung aufweisen, die durch die Abdeckung verschließbar ist. Das Evakuieren kann dabei durch Absaugen von Luft aus einem Innenraum der Form erfolgen. Die Wannenform könnte eine auf das Bauteil angepasste Bodenfläche aufweisen und sich zu einem von der Bodenfläche abgewandten Rand hin ausweiten. Dadurch wird das manuelle Einlegen des Korrosionsschutzlage und des Bauteils vereinfacht, da zur Handhabung des Bauteils in der Form zu den Seiten hin Raum zur Verfügung steht. Der Rand könnte eine ebene oder leicht konvexe Auflagefläche aufweisen, die beispielsweise parallel zu der Bodenfläche verläuft. Die Abdeckung könnte dann auf die Auflagefläche aufgedrückt werden, um eine Abdichtung hervorzurufen.

Weiterhin könnte das Bereitstellen das Ausschneiden der Korrosionsschutzlage aus einem Werkstück aufweisen. Das Ausschneiden könnte dabei durch ein Laserverfahren oder ein zerspanendes Verfahren erreicht werden.

Eine vorteilhafte Ausführungsform weist ferner das Auftragen der aushärtbaren Dichtmasse auf die zweite Oberfläche der Korrosionsschutzlage und/oder der zu schützenden Oberfläche vor dem Auflegen der zu schützenden Oberfläche auf die zweite Oberfläche auf. Dies kann vor dem Einbringen der Korrosionsschutzlage und des Bauteils in die Form erfolgen. Die Dichtmasse könnte beispielhaft standardmäßig eingesetzte Polysulphate oder andere Ein- oder Zweikomponenten-Systeme umfassen.

Die Erfindung betrifft ferner ein System zum Anbringen einer Korrosionsschutzlage auf einer zu schützenden Oberfläche eines Bauteils

nach dem vorangehend geschilderten Verfahren, aufweisend eine Form mit einem Hohlraum und einer darin angeordneten Bodenfläche, eine biegeweiche Abdeckung, eine Luftabsaugeinheit, eine Korrosionsschutzlage und eine aushärtbare Dichtmasse, wobei die Korrosionsschutzlage dazu ausgebildet ist, unter Verwendung der Dichtmasse auf das Bauteil geheftet zu werden, wobei die Form dazu ausgebildet ist, das Bauteil mit daran angeordneter Korrosionsschutzlage auf der Bodenfläche aufzunehmen, wobei die biegeweiche Abdeckung dazu ausgebildet ist, den Hohlraum unter Einschluss des betreffenden Bauteils abzudichten, wobei die Luftabsaugeinheit dazu ausgebildet ist, den Hohlraum zu evakuieren, und wobei die biegeweiche Abdeckung dazu ausgebildet ist, bei evakuiertem Hohlraum auf das Bauteil zu drücken.

In einer vorteilhaften Ausführungsform weist die Form einen von der Bodenfläche abgewandten Rand aufweist, auf den die Abdeckung auflegbar.

Das System kann ferner mehrere Befestigungsmittel zum Verspannen der Abdeckung mit der Form aufweisen. Die Befestigungsmittel können insbesondere Schnellverschlüsse oder Schnellspanner umfassen, die werkzeuglos bedienbar sind.

Wie vorangehend erwähnt kann die Abdeckung eine Folie, eine folienartige Struktur und/oder eine Bahn aus einem Silikon und einen druckdichten Deckel aufweist.

Besonders bevorzugt weist der Deckel einen mittigen Ausschnitt auf. Durch diesen kann der Folie, der folienartigen Struktur oder der Silikonbahn eine ausreichende Bewegbarkeit vermittelt werden.

In einer bevorzugten Ausführungsform ist die Abdeckung zumindest bereichsweise transparent. Das Verfahren kann dann von außen inspiziert werden.

Die Form könnte wannenförmig ausgebildet sein und eine obere Öffnung aufweisen, die durch die Abdeckung verschließbar ist, wobei die Form sich von der Bodenfläche aus zu der oberen Öffnung hin aufweitet.

In einer vorteilhaften Ausführungsform könnte die Form an zumindest einer Stirnseite eine abnehmbare Wandung aufweisen, sodass mehrere Formen zum Aufnehmen längerer Bauteile miteinander kombinierbar sind. Insbesondere könnten mehrere wannen- oder U-förmige Formen aneinandergesteckt werden, um längere Hohlräume zu realisieren. Die äußersten Formen werden nach außen hin durch jeweils eine Wandung geschlossen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.

In den Figuren stehen weiterhin gleiche Bezugszeichen für gleiche oder ähnliche Objekte.
- Fig. 1: zeigt eine Schnittansicht auf ein erfindungsgemäßes System.
- Fig. 2: zeigt eine Draufsicht auf ein erfindungsgemäßes System.

### DETAILLIERTE DARSTELLUNG EXEMPLARISCHER AUSFÜHRUNGSFORMEN

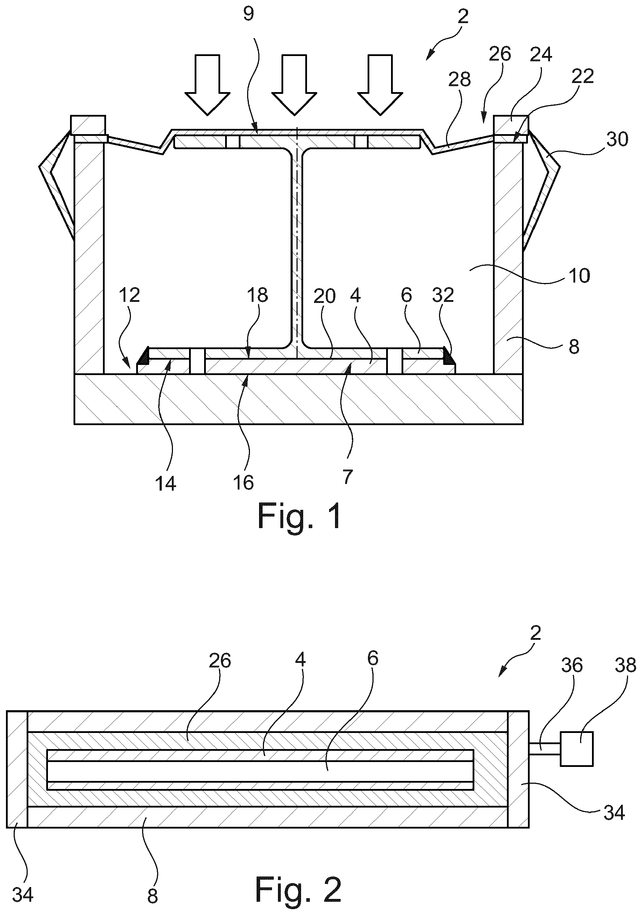

Fig. 1 zeigt eine schematische Schnittdarstellung eines Systems 2 zum Anbringen einer Korrosionsschutzlage 4 auf einer zu schützenden

Oberfläche eines Bauteils 6. Das System 2 weist eine Form 8 auf, die einen Hohlraum 10 und eine darin angeordnete Bodenfläche 12 aufweist. Auf der Bodenfläche 12 liegt die Korrosionsschutzlage 4 auf. Diese kann beispielhaft aus einem Titanblech geschnitten sein.

Das Bauteil 6 ist hier beispielhaft ein stranggepresstes Aluminiumprofil mit einem Doppel-T-förmigen Querschnitt und einer länglichen Erstreckung. Es weist eine zu schützende Oberfläche 14 auf, die bei der späteren Installation in einer Kabine eines Flugzeugs nach oben gerichtet ist und flüssiger Verschmutzung und Kondensation ausgesetzt sein kann. In Fig. 1 ist das Bauteil 6 mit einer Oberseite 7 nach unten und einer Unterseite 9 nach oben gerichtet in der Form 8.

Die Korrosionsschutzlage 4 weist eine flache, ebene Form mit einer sehr geringen Materialstärke auf und wird von einer ersten Oberfläche 16, die bündig auf der Bodenfläche 12 aufliegt, und einer entgegengesetzt angeordneten zweite Oberfläche 18 begrenzt. Letztere ist bündig mit der zu schützenden Oberfläche 14 des Bauteils 6 verklebt. Hierzu dient eine aushärtbare Dichtmasse 20, welche beispielhaft vor dem Einbringen des Bauteils 6 und der Korrosionsschutzlage 4 auf die zu schützende Oberfläche 14 und/oder die zweite Oberfläche 18 aufgebracht wurde. Durch eine Adhäsion nach Auftragen und vor Aushärtung der Dichtmasse 20 und das Zusammensetzen der beiden Komponenten 4 und 6 heften diese zunächst aneinander und lassen sich dadurch in umgekehrter Ausrichtung in die Form 8 einbringen, um einen Aushärtevorgang zu beginnen. Nach dem Aushärten der Dichtmasse zwischen den beiden Komponenten 4 und 6 entsteht ein stoffschlüssiger Verbund durch Adhäsion an den Grenzflächen und Kohäsion der Dichtmasse.

Durch eine Kohäsion nach Auftragen der Dichtmasse 20 und das Zusammensetzen der beiden Komponenten 4 und 6 heften beide Komponenten aneinander und lassen sich folglich in umgekehrter Ausrichtung in die Form 8 einbringen.

Die Form 8 weist einen Rand 22 auf, auf dem ein Deckel 24 angeordnet ist. Dieser weist einen Ausschnitt 26 auf, sodass der gesamte Deckel 24 eine streifenartige, dem Rand 22 folgende Form aufweist. Zwischen dem Deckel 24 und dem Rand 22 ist eine biegeweiche Abdeckung 28 angeordnet, die sich über dem Bauteil 6 befindet und direkt auf der Unterseite 9 aufliegt. Die biegeweiche Abdeckung 28 kann mit dem Deckel 24 verbunden sein, sodass beide Komponenten ein einzelnes Teil ergeben.

Durch ein Absaugen von Luft aus dem Hohlraum 10 entsteht dort ein Vakuum, durch das sich die biegeweiche Abdeckung 28 bündig auf das Bauteil 6 schmiegt und dieses in Richtung der Korrosionsschutzfläche 4 bzw. der Bodenfläche 12 drückt. Zum Fixieren des Deckels 24 an der Form 8 sind eine Reihe von Schnellspannmitteln 30 vorgesehen, die bevorzugt manuell und werkzeuglos betätigbar sind.

An Seiten des Bauteils 6 herausgequetschte Dichtmasse 20 kann als ein Übergangsstück 32 verwendet werden. Hierzu ist denkbar, dass die ausgehärtete Dichtmasse 20 später angeschliffen wird.

Fig. 2 zeigt eine Draufsicht auf das System 2 mit darin eingelegtem Bauteil 6 und darunter befindlicher Korrosionsschutzlage 4. Hier ist die beispielhaft längliche Form des Bauteils 6 ersichtlich. Werden kürzere Bauteile 6 in die Form 8 gebracht könnten Zwischenwände (hier nicht gezeigt) den effektiven Hohlraum 10 verkleinern, um eine einfachere Evakuierung zu ermöglichen. Stirnseitige Wandungen 34 könnten abnehmbar sein und eine Kombination mehrerer Formen 8 ermöglichen. Die Form 8 weist ferner einen Sauganschluss 36 auf, an dem ein Vakuum angelegt werden kann. Hierzu dient eine angedeutete Absaugeinheit 38.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis
auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: System
- 4: Korrosionsschutzlage
- 6: Bauteil
- 7: Oberseite
- 8: Form
- 9: Unterseite
- 10: Hohlraum / Innenraum
- 12: Bodenfläche
- 14: zu schützende Oberfläche
- 16: erste Oberfläche
- 18: zweite Oberfläche
- 20: Dichtmasse
- 22: Rand
- 24: Deckel
- 26: Ausschnitt
- 28: biegeweiche Abdeckung
- 30: Schnellspannmittel / Befestigungsmittel
- 32: Übergangsstück
- 34: Wandung
- 36: Sauganschluss
- 38: Absaugeinheit

## Patentansprüche

1. Verfahren zum Anbringen einer Korrosionsschutzlage (4) auf einer zu schützenden Oberfläche (14) eines Bauteils (6), aufweisend die Schritte:
- Bereitstellen der Korrosionsschutzlage (4) mit einer ersten Oberfläche (16) und einer entgegengesetzt angeordneten zweiten Oberfläche (18),
- Auflegen der ersten Oberfläche (16) der Korrosionsschutzlage (4) auf einer Bodenfläche (12) einer Form (8),
- Auflegen der zu schützenden Oberfläche (14) des Bauteils (6) auf der zweiten Oberfläche (18) der Korrosionsschutzlage (4) unter Einschluss einer Schicht einer aushärtbaren Dichtmasse (20),
- Verschließen der Form (8) durch Auflegen einer biegeweichen Abdeckung (28) unter Einschluss der Korrosionsschutzlage (4) und des Bauteils (6),
- Evakuieren der Form (8), sodass die Abdeckung (28) das Bauteil (6) in Richtung der Korrosionsschutzlage (4) drückt, und
- Entfernen des Vakuums und der Abdeckung (28) nach Aushärtung der Dichtmasse (20).

2. Verfahren nach Anspruch 1,
wobei die Korrosionsschutzlage (4) ein Titanblech ist.

3. Verfahren nach Anspruch 1 oder 2,
wobei die Abdeckung (28) eine Folie, eine folienartige Struktur und/oder eine Bahn aus einem Silikon und einen druckdichten Deckel (24) aufweist.

4. Verfahren nach einem der vorhergehenden Ansprüche,
wobei das Bauteil (6) ein Profilbauteil mit einer Oberseite (7) und einer Unterseite (9) aufweist, wobei die Oberseite (7) auf die zweite Oberfläche (18) der Korrosionsschutzlage (4) aufgelegt wird.

5. Verfahren nach einem der vorhergehenden Ansprüche,
wobei die Form (8) wannenförmig ausgebildet ist und eine obere Öffnung aufweist, die durch die Abdeckung (28) verschließbar ist, und
wobei das Evakuieren durch Absaugen von Luft aus einem Innenraum (10) der Form (8) erfolgt.

6. Verfahren nach einem der vorhergehenden Ansprüche,
wobei das Bereitstellen das Ausschneiden der Korrosionsschutzlage (4) aus einem Werkstück aufweist.

7. Verfahren nach einem der vorhergehenden Ansprüche,
ferner aufweisend das Auftragen der aushärtbaren Dichtmasse (20) auf die zweite Oberfläche (18) der Korrosionsschutzlage (4) und/oder der zu schützenden Oberfläche (14) vor dem Auflegen der zu schützenden Oberfläche (14) auf die zweite Oberfläche (18).

8. System (2) zum Anbringen einer Korrosionsschutzlage (4) auf einer zu schützenden Oberfläche (14) eines Bauteils (6), aufweisend:
- eine Form (8) mit einem Hohlraum (10) und einer darin angeordneten Bodenfläche (12),
- eine biegeweiche Abdeckung (28),
- eine Luftabsaugeinheit (38),
- eine Korrosionsschutzlage (4) und
- eine aushärtbare Dichtmasse (20),
wobei die Korrosionsschutzlage (4) dazu ausgebildet ist, unter Verwendung der Dichtmasse (20) auf das Bauteil (6) geheftet zu werden,
wobei die Form (8) dazu ausgebildet ist, das Bauteil (6) mit daran angeordneter Korrosionsschutzlage (4) auf der Bodenfläche (12) aufzunehmen,
wobei die biegeweiche Abdeckung (28) dazu ausgebildet ist, den Hohlraum (10) unter Einschluss des betreffenden Bauteils (6) abzudichten,
wobei die Luftabsaugeinheit (38) dazu ausgebildet ist, den Hohlraum (10) zu evakuieren, und
wobei die biegeweiche Abdeckung (28) dazu ausgebildet ist, bei evakuiertem Hohlraum (10) auf das Bauteil (6) zu drücken.

9. System (2) nach Anspruch 8,
wobei die Form (8) einen von der Bodenfläche (12) abgewandten Rand (22) aufweist, auf den die Abdeckung (28) auflegbar ist.

10. System (2) nach Anspruch 8 oder 9,
ferner aufweisend mehrere Befestigungsmittel (30) zum Verspannen der Abdeckung (28) mit der Form (8).

11. System (2) nach einem der Ansprüche 8 bis 10,
wobei die Abdeckung (28) eine Folie, eine folienartige Struktur und/oder eine Bahn aus einem Silikon und einen druckdichten Deckel (24) aufweist.

12. System (2) nach Anspruch 11,
wobei der Deckel (24) einen mittigen Ausschnitt (26) aufweist.

13. System (2) nach einem der Ansprüche 8 bis 12,
wobei die Abdeckung (28) zumindest bereichsweise transparent ist.

14. System (2) nach einem der Ansprüche 8 bis 13,
wobei die Form (8) wannenförmig ausgebildet ist und eine obere Öffnung aufweist, die durch die Abdeckung (28) verschließbar ist, und
wobei die Form (8) sich von der Bodenfläche (12) aus zu der oberen Öffnung hin aufweitet.

15. System (2) nach einem der Ansprüche 8 bis 14,
wobei die Form (8) an zumindest einer Stirnseite eine abnehmbare Wandung (34) aufweist, sodass mehrere Formen (8) zum Aufnehmen längerer Bauteile (6) miteinander kombinierbar sind.
